# EUROPEAN PATENT APPLICATION

(11) **EP 4 582 692 A1**
(43) Date of publication of application: **09.07.2025**
(21) Application number: 24150501.5
(22) Date of filing: 05.01.2024
(51) Int. Cl.: F03D 13/20, F03D 80/80

(54) **A TOWER OR TOWER SECTION, WIND TURBINE AND METHOD**

(71) Applicant: Siemens Gamesa Renewable Energy A/S, 7330 Brande (DK)
(72) Inventor: Damgaard, Torben Reuss, 7400 Herning (DK); Game, Harshad, Pin-560100 Electronic city phase 1 (IN); Jensen, Jonas Bang, 6621 Gesten (DK); Kumar Tinku, Abhiram, 560100 Bengaluru (IN); Lakkisetti, Raviteja, Pin 560100 Bengaluru, Karnataka (IN)
(74) Representative: SGRE-Association

(57) **Abstract**

A tower (6) or tower section (7, 8, 9) of a wind turbine (1), comprising: a tower wall (47) enclosing a tower inner volume (46), a first pipe (14) arranged inside the tower inner volume (46) and extending in the vertical direction (L) of the tower (6) or tower section (7, 8, 9), and a first high-voltage cable (114) extending through the first pipe (14).

In this manner, the high-voltage cable is guided efficiently through the tower or tower section, avoiding the need for clamping the same at close intervals.

## Description

The present invention relates to a tower or tower section for a wind turbine, to a wind turbine as well as to a method for manufacturing a tower or tower section.

The annual energy production of wind turbines has been increasing for many years. To efficiently transfer the energy from the wind turbine to the grid, it has become common practice to use transmission voltages of 66 kV, for example. This applies in particular to offshore wind turbines. This high voltage has a positive impact on cable losses and efficiency. To this end, a step-up transformer is arranged in the nacelle of the wind turbine which converts the generated wind electricity to the kV-level needed. High voltage cables are used to electrically connect the transformer to subsea cables etc.

Due to the need for higher power output of wind turbines, the number of high-voltage cables inside the tower has increased. Handling of the high-voltage cables in the tower, during insulation and replacement, is a time-consuming operation. So far, it is common practice to pull up the high-voltage cable using a winch. The high-voltage cable is then mounted on a so-called cable ladder extending vertically through the tower. The high-voltage cable is attached to the cable ladder using clamps at intervals of no more than 1.2 m. Thus, hundreds of high-voltage cable clamps, for example 300 to 400 clamps, need to be attached to hold one high-voltage cable securely, avoiding any movement thereof. In a case where three voltage cables need to be mounted within one tower, typically an extra cable ladder is required. This further increases costs. When a fire occurs, the high-voltage cables are not protected or isolated from each other. For example, when there is a short circuit in one of the high-voltage cables, there is a risk of fire spreading to nearby objects.

Furthermore, a brake system is used to hold the high-voltage cable while it is clamped by the technicians. The brake system is typically provided at the next higher platform. When the brake system fails for some reason, the high-voltage cable may fall out of control and harm personnel on the platform below or damage the tower internals. The high-voltage cable is heavy at, for example, 10 kg/m length.

It is one object of the present invention to provide an improved tower or tower section for a wind turbine.

Accordingly, a tower or tower section for a wind turbine, comprising a tower wall enclosing a tower inner volume, a first pipe arranged inside the tower inner volume and extending in the vertical direction of the tower or tower section, and a first high-voltage cable extending through the first pipe.

By using a pipe to guide the high-voltage cable within the tower, the need for clamping the high-voltage cable no longer exists or is much reduced. This minimizes the installation time. Also, the installation is much safer as, when the high-voltage cable indeed unexpectedly falls, the fall is limited to the inner volume of the pipe. Thus, the risk of personnel or equipment being harmed or damaged is much reduced. Also, in the past, the clamping of the high-voltage cable was done at preassembly which happens for offshore turbines at sea. With the present design, the pipe is preferably installed already at the tower manufacturer, which is on land. This much reduces the effort at preassembly. Finally, using a pipe provides a fire-safe protection for the high-voltage cable.

The tower may be comprised of one or more tower sections. For example, four or five sections are used. The tower or tower sections may be manufactured from concrete or steel. The tower wall may, in a cross-sectional view, be ring-shaped, for example circularly ring-shaped. The tower inner volume is that volume which lies within the ring.

For example, at least a first pipe is arranged inside the tower inner volume. In embodiments, a second pipe, a third pipe or more pipes may be arranged inside the tower inner volume, each pipe extending in the vertical direction of the erected tower or tower section, with a respective first, second, third and further high-voltage cable extending within a respective pipe.

The pipe may be made of metal, for example aluminium. For example, the pipe may have a diameter of larger than 100, larger than 150 or larger than 200 mm. The pipe may have a wall thickness of larger than 2 mm, for example 3 mm. The pipe may have a length of at least 3 m, for example 4 m. When it is referred to "pipe" herein, this may refer to the first, second, third or any other pipe, unless something to the contrary being said.

The pipe and the high-voltage cable are different components. They are, preferably, not rigidly attached to each other. For example, the high-voltage cable is comprised of one or more conductors, in particular copper conductors. Each conductor may have a cross-section of larger than 100, 200 or 300 mm². For example, three conductors are provided in each high-voltage cable. The one or more conductors are arranged inside a cable sheath, which is made of an insulation material. The pipe is a component separate from the insulation material and separate from the conductors. The pipe is not attached to the high-voltage cable or any of its components, at least not in a rigid fashion.

According to an embodiment, the tower or tower section further comprises:
a second pipe arranged in parallel with the first pipe inside the tower volume, and
a second high-voltage cable extending through the second pipe.

The power output of the wind turbine may require more than one high-voltage cable being provided, for example, two, three or more. By having the second pipe arranged in parallel with the first pipe, it is ensured that the first and second high-voltage maintain a minimum distance from each other, i.e., are separated from each other in a cross-sectional view. For example, the centers of the respective high-voltage cables may be arranged at a distance of larger than 100 or larger than 200 mm from each other. As a result, electromagnetic forces exerted by the first and second high-voltage cable on each other are within an acceptable range. In particular, the first and second high-voltage cable do not come in direct contact with each other. Thus, short-circuit forces are reduced significantly in case where there is a short circuit in one of the first and second high-voltage cables.

According to an embodiment, an air gap is present between an outer surface of the high-voltage cable and an inner surface of the pipe.

This advantageously prevents or mitigates mechanical interaction between the high-voltage cable and the pipe. Furthermore, when there is more than one pipe provided, the air gap ensures a sufficient distance between the high-voltage cables when seen in cross-section to reduce electromagnetic interaction as described above.

According to a further embodiment, further comprising spacers arranged along the length of the first and/or second high-voltage cable to maintain the air gap.

According to a further embodiment, the spacers center the first and/or second high-voltage cable on a longitudinal central axis of the first and/or second pipe.

Thereby, the space between adjacent high-voltage cables, when seen in cross-section, is maintained or maximized.

According to a further embodiment, the spacers are made of a flexible material.

For example, the spacers are made of rubber. In an alternative embodiment, a foam material is used.

According to an embodiment, the spacers comprise multiple fingers extending inwardly from an outer circumference with gaps formed between adjacent fingers.

The fingers easily center the first and/or high-voltage cable along the longitudinal central axis of the first and/or second pipe. The gaps between the fingers allow hot air to pass upwardly within the pipe. Hot air may occur when the high-voltage cables become hot and heat the surrounding air within the respective pipe.

According to a further embodiment, the first and/or second pipe is comprised of multiple pipe sections flanged together at respective flanges.

For example, the length of the first and/or second pipe is more than 10, more than 20 or more than 30 m. Each pipe may be divided into multiple pipe sections. The pipe sections are flanged together to make up a respective pipe. At the respective flanges, the respective pipe sections may be connected using bolts.

According to a further embodiment, the spacers are arranged between the respective flanges.

Thereby, the spacers may be easily mounted and integrated within each pipe.

According to an embodiment, the tower or the tower section further comprises a zig-zag shaped metal plate connecting the first and/or second pipe to ground potential.

As the tower bends during operation of the wind turbine, the first and/or second pipe will move up and down. The same effect may also occur due to thermal expansion and contraction of the first and/or second pipe. Thus, when connecting the first and/or second pipe to ground potential, a conductive connection is required which allows for the resulting change in length. According to one embodiment, a braided conductor is used for this purpose. However, in this improved embodiment, a zig-zag shaped metal plate is used instead. The zig-zag shape accommodates the changed length. Inspection intervals on this kind of conductor are longer as compared to inspection intervals on braided conductors.

According to a further embodiment, the tower or tower section comprises a ladder wherein the first and/or second pipe is attached to the ladder in a frictionally locking manner, allowing a longitudinal movement of a first and/or second pipe relative to the ladder.

As explained earlier, when the tower bends and/or when the first and/or second pipe thermally expands or contracts, this change in length must be accounted for. The bending of the tower or thermal expansion of the first and/or second pipe will create or result in forces which overcome the frictional locking. However, the frictional locking mechanism holds the first and/or second pipe in place, compensating the force of gravity acting on the first and/or second pipe.

According to a further embodiment, the first and/or second pipe is, for the attachment of a first and/or second pipe to the ladder in a frictionally locking manner, clamped between two half-shells fastened to each other.

For example, the half-shells are made up of POM (polyoxymethylene) or another plastic material. The shells may be fastened to each other using bolts. The half-shells may be fastened to the ladder using the same or different bolts or may be attached to the ladder by other means.

According to a further embodiment, the tower and/or tower section further comprises a platform and a cable clamp, wherein the first and/or second pipe is arranged below the platform and the cable clamp suspends the first and/or high-voltage cable from the platform.

Thus, the cable clamp carries the weight of the high-voltage cable, at least the weight of the section of the high-voltage cable extending within the corresponding pipe below the cable clamp. By having multiple platforms and cable clamps, the total weight of the high-voltage cable is divided between the multiple cable clamps.

According to a further embodiment, the tower or tower section comprises a further pipe arranged above and spaced apart from the platform, wherein the cable clamp is attached to a portion of the first and/or second high-voltage cable arranged between the first and/or second pipe and the further pipe.

In order to carry the weight of the high-voltage cable, the cable clamp must be attached to the same. Therefore, a portion of the high-voltage cable must be accessible, i.e., when seen in cross-section not covered by the pipe associated with that high-voltage cable. To this end, the, for example, first and/or second pipe stops underneath a corresponding platform. Above that platform, there is a gap within the piping in which the cable clamp is arranged and attached to the free portion of the high-voltage cable. Above that gap, there runs a further pipe, for example in a colinear fashion with the pipe underneath the platform. The high-voltage cable extends through that further pipe upwards to the next platform. Preferably, the first pipe and the further pipe forms a first column of pipes and/or the second pipe and the/another further pipe forms a second column of pipes.

According to a further aspect, a wind turbine is provided which comprises the tower or tower section as described above.

According to a further aspect, a method of manufacturing a tower or tower section for a wind turbine is provided. The tower or tower section has a tower wall enclosing a tower inner volume. The method comprises:
arranging a first pipe inside the tower inner volume so as to extend in the axial direction of the tower or tower section, and
erecting the tower or tower section at an erection site of the wind turbine, and
passing a first high-voltage cable through the first pipe.

Preferably, the high-voltage cable is installed when the tower or tower section is arranged in a horizontal (non-erected) position. This simplifies installation. Advantageously, the high-voltage cable can be mounted easily within the tower by passing it through the pipe.

The embodiments and features described with reference to the tower or tower section of the present invention apply mutatis mutandis to the wind turbine and to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows, in a side view, a wind turbine according to an embodiment;
Fig. 2 shows, in a perspective view, a tower section of the wind turbine from Fig. 1;
Fig. 3 shows, in a perspective view, a platform at the top of the tower section in Fig. 2;
Fig. 4 shows, in an enlarged view, a cable clamp from Fig. 3;
Fig. 5 shows, in an enlarged view taken from Fig. 2, three pipes running in parallel, each housing a respective high-voltage cable;
Fig. 6 shows, in an exploded view, one of the pipes shown in Fig. 5;
Fig. 7 shows a spacer or gasket illustrated in Fig. 6;
Fig. 8 shows the platform from Fig. 2 from below in a perspective view;
Fig. 9 illustrates, in a perspective view, a flange used to attach the three pipes in Fig. 8 to the bottom of the platform;
Fig. 10 illustrates a zig-zag plate used to connect one of the pipes of Fig. 2 to ground potential, in a perspective view;
Fig. 11 shows an attachment mechanism using two half-shells to connect the three pipes to the ladder shown in Fig. 2;
Fig. 12 shows an exploded view of the attachment mechanism of Fig. 11; and
Fig. 13 shows, in a flow diagram, a method according to an embodiment.

In the Figures, like reference numerals designate like or functionally equivalent elements, unless otherwise indicated.

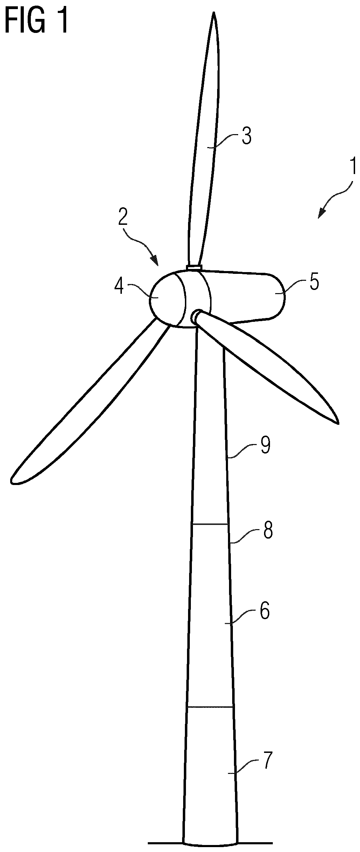

Fig. 1 shows a wind turbine 1 according to an embodiment. The wind turbine 1 comprises a rotor 2 having two or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1.

The tower 6 may be connected to a monopile or concrete foundation in the ground or sea bed. The tower 6 may comprise one or more tower sections 7, 8, 9. The tower sections 7, 8, 9 are stacked on top of each other when the wind turbine 1 is erected, for example on land or out at sea. The tower sections 7, 8, 9 may be made of concrete or steel. At respective ends, the tower sections 7, 8, 9 may comprise flanges for connecting adjacent tower sections 7, 8 and 8, 9 together, for example, using bolts.

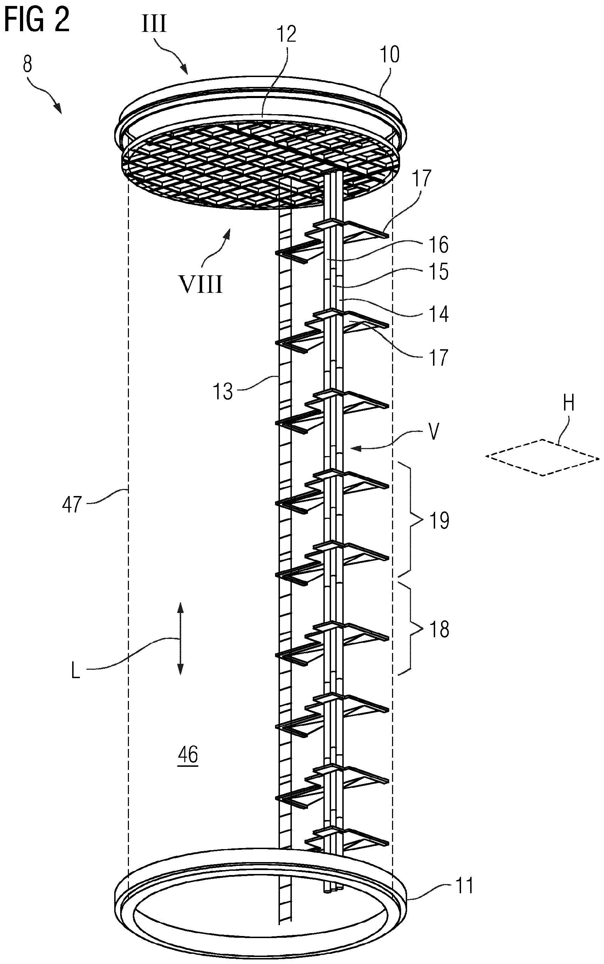

Fig. 2 illustrates, in a perspective view looking slightly upward, the tower section 8 from Fig. 1. The tower section 8 has a top flange 10 and a bottom flange 11. A tower wall 47 (also known as "tower shell") extending between the top and bottom flanges 10, 11 and enclosing a tower inner volume 46 is indicated with a broken line in Fig. 1. The tower section 8 has a platform 12 at its top end. Another platform (not shown) may be arranged at the bottom end.

A ladder 13 extends in the lengthwise direction L of the tower 6. The lengthwise direction L corresponds to the height direction of the tower 6 when the wind turbine 1 is in its erected state.

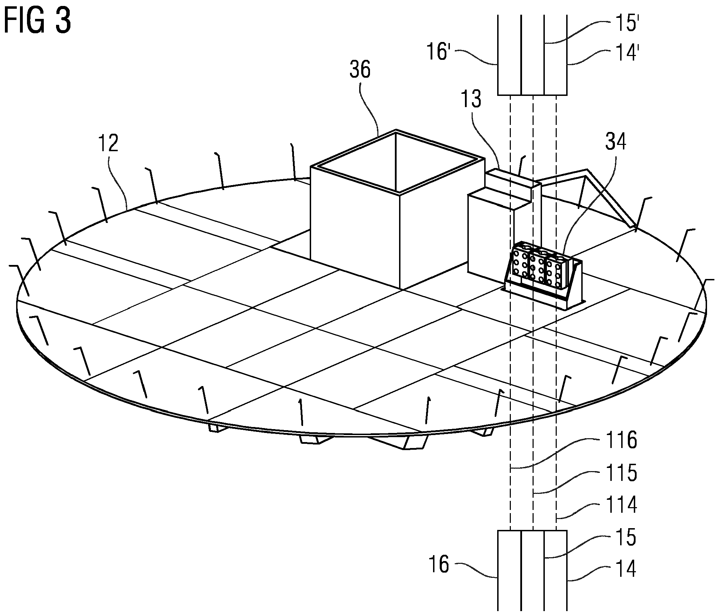

Three pipes 14, 15, 16 (also termed a "first", "second" and "third" pipe herein) are also extending in the lengthwise direction L. They are held to the ladder 13 using bracket arrangements 17. In each pipe 14, 15, 16 runs a high-voltage cable 114, 115, 116 (shown in Fig. 3 and also termed "first", "second" and "third" high-voltage cable herein) as will be explained in more detail later.

Fig. 3 illustrates, in a view III from Fig. 2, the platform 12 as seen from slightly above, with pipes 14, 15, 16 arranged below the platform 12, further pipes 14', 15', 16' arranged above the platform 12 and a respective high-voltage cable 114, 115, 116 running inside columns of pipes 14, 14' and 15, 15' and 16, 16'. Fig. 3 also illustrates the ladder 13 continuing on the platform 12 upwards. Next to the ladder 13 there is a tower lift 36 provided. The tower lift 36 is used to travel between the different platforms.

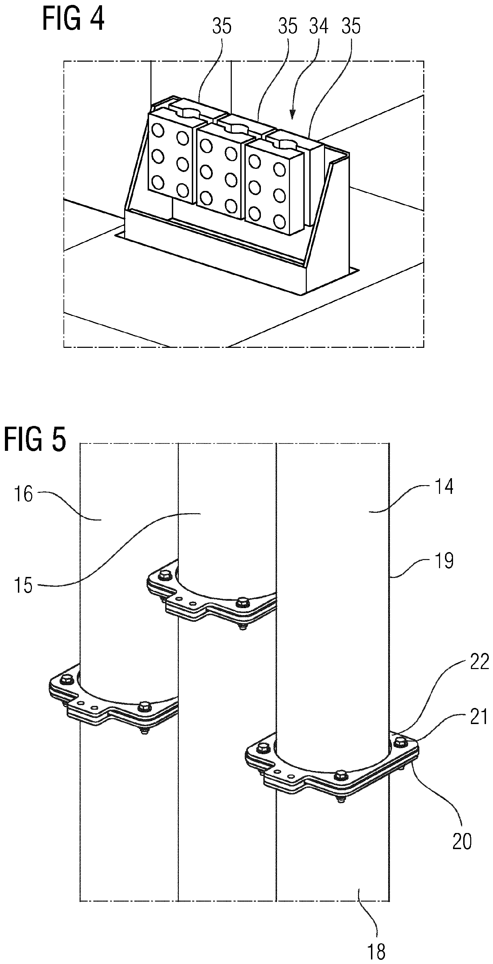

Fig. 4 shows, in an enlarged view from Fig. 3, a cable clamp 34 arranged on the platform 12 and having three clamping units 35. Each clamping unit 35 clamps one of the high-voltage cable 114, 115, 116.

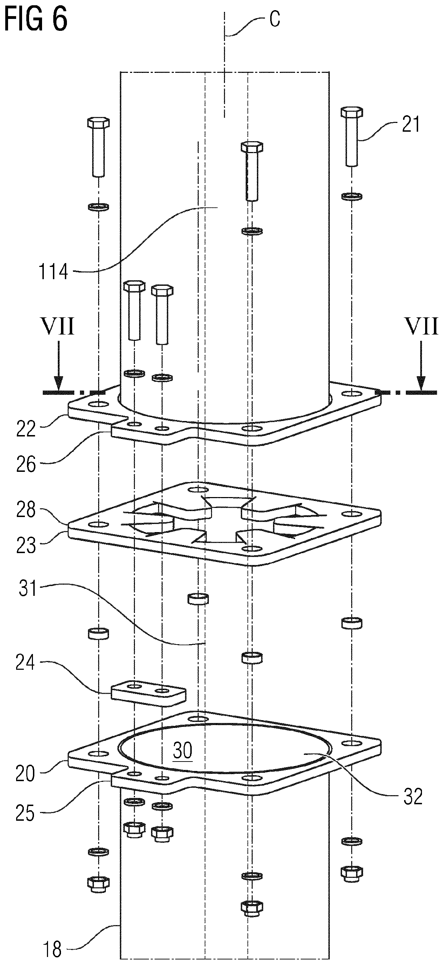

Fig. 5 shows an enlarged view V from Fig. 1. An exploded view of the pipe 14 of Fig. 5 is shown in Fig. 6. Each pipe 14, 15, 16 may be made of aluminum or another metal (preferably light-weight) with a wall thickness of 3 mm, for example. Each pipe 14, 15, 16 may a have a total length of 32 m, for example.

Each pipe 14, 15, 16 may be comprised of multiple - for example, four - pipe sections 18, 19 (see also Fig. 2), with each pipe section 18, 19 having a length of 4m, for example.

For example, the pipe 14 is made up of a first section 18 flanged to a second section 19. The first section 18 has a flange 20 (see Fig. 5) connected by means of bolts 21 to a flange 22 of the section 19. It is shown in Fig. 6 that a spacer 23 is arranged between the adjacent flanges 20, 22. The spacer 23 is made of a flexible material such as rubber. Once the bolts 21 have been tightened, the spacer 23 may act as a gasket in the radial direction thus preventing air from flowing out of the pipe 14 in the radial direction at the position of the flanges 20, 21. A distance plate 24 is provided, for example between protruding ends 25 and 26 of the respective flanges 20, 22. The distance plate 24 prevents oversqueezing of the spacer 23 when the bolts 21 are tightened.

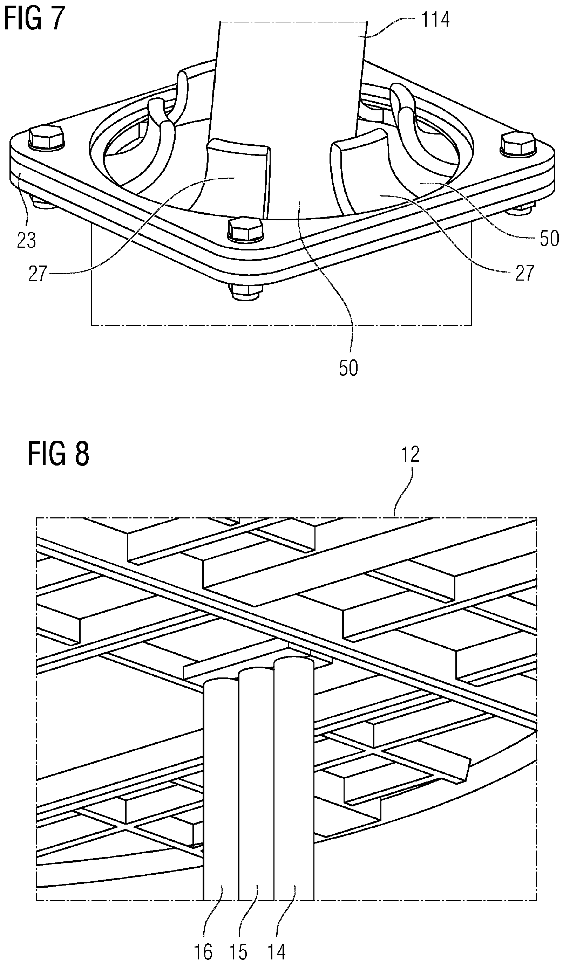

Fig. 7 illustrates a section VII-VII from Fig. 6 in a perspective view. Therein, it can be seen that the spacer 23 has multiple fingers 27. These extend radially inward from an outer frame 28 (see Fig. 6) of the spacer 23. The fingers 27 flex radially outwardly away in an elastic manner to allow the high-voltage cable 114 to pass therethrough. The high-voltage cable 114 is, due to the action of the spacers 28 (multiple of these are provided along the length of the pipe 14 at each flanged connection), held on the longitudinal center line C (see Fig. 6) of the pipe 14. Thus, the high-voltage cable 114 is held so as to form an air gap 30 (see Fig. 6) between its outer circumference 31 and the inside surface 32 of the pipe 14. Air gaps 50 between the fingers 27 of the spacer 23 allow hot air to rise in the pipe 14.

The high-voltage cable 114 extends all the way up to the nacelle 5, preferably to a transformer (not shown) arranged therein. At the bottom of the tower 6, the high-voltage cable 114 may be connected to a subsea cable (also not shown). The high-voltage cable 114 may be configured to transfer electricity at a voltage lager than 30 kV (in particular 66 kV), for example. The high-voltage cable 114 may comprise multiple, for example, three cores (not shown) made of copper or another conductive material. The cores are arranged inside an insulation sheath, the outside surface 31 of which is shown in Fig. 6 and 7, for example. The fingers 27 of the spacer 23 act against this outer surface 31. The pipes 15, 16 (see Fig. 5) comprise identical arrangements as explained for the pipe 14, thus the second pipe 15 housing a second high-voltage cable 115 and the third pipe 16 housing a third high-voltage cable 116.

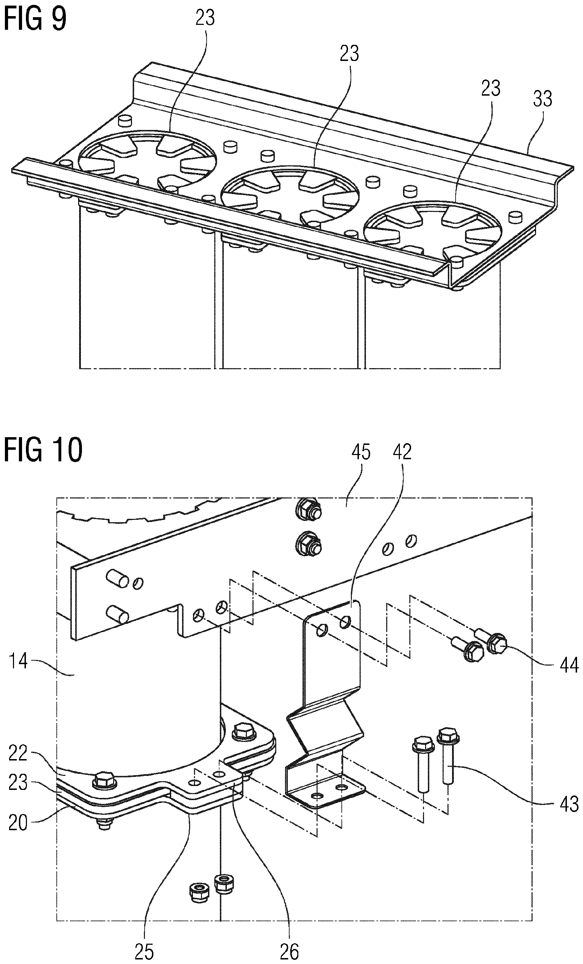

Fig. 8 illustrates a view VIII from Fig. 2. Therein, it can be seen that the pipe ends of the pipes 14, 15, 16 are attached using a flange plate 33 shown in Fig. 9 in perspective view to the bottom of the tower platform 12. The flange plate 33 is a unitary plate against which the ends of the pipes 14, 15, 16 are flanged with a respective spacer 23 provided in between in each case.

Now returning to Figs. 3 and 4, it is shown that the cable clamp 34 is arranged on the platform 12 above the pipes 14, 15, 16 coming up from below as seen in Fig. 8. The corresponding high-voltage cables 114, 115, 116 pass through the platform 12 and are respectively clamped in one of the clamping units 35 of the cable clamp 34. Corresponding further pipes 14', 15', 16' are arranged above the cable clamp 34. Once the high-voltage cables 114, 115, 116 have passed through the cable clamp 34 and through the corresponding free space (not being covered by a corresponding pipe), they enter again into the further pipes 14', 15', 16'. Preferably, the further pipes 14', 15', 16' are each arranged colinearly with a corresponding pipe 14, 15, 16. Thus, the first pipe 14 forms one column of pipes with at least one further pipe 14', the second pipe 15 forms one column of pipes with at least one further pipe 15' and the third pipe 16 forms one column of pipes with at least one further pipe 16'. Preferably, at least two or three further pipes 14', 15' and 16' are provided in a respective column of pipes.

Fig. 10 illustrates the pipe 14 with its flanges 20, 22 shown in Fig. 5. A zig-zag shaped plate 42 made of, for example, aluminum, copper, or another conductor is attached at its one end to the protruding ends 25, 26 by bolts 43, and is bolted at its other end using bolts 44 to a ladder bracket 45 attached to the ladder 13. The ladder bracket 45 hereby serves as ground potential.

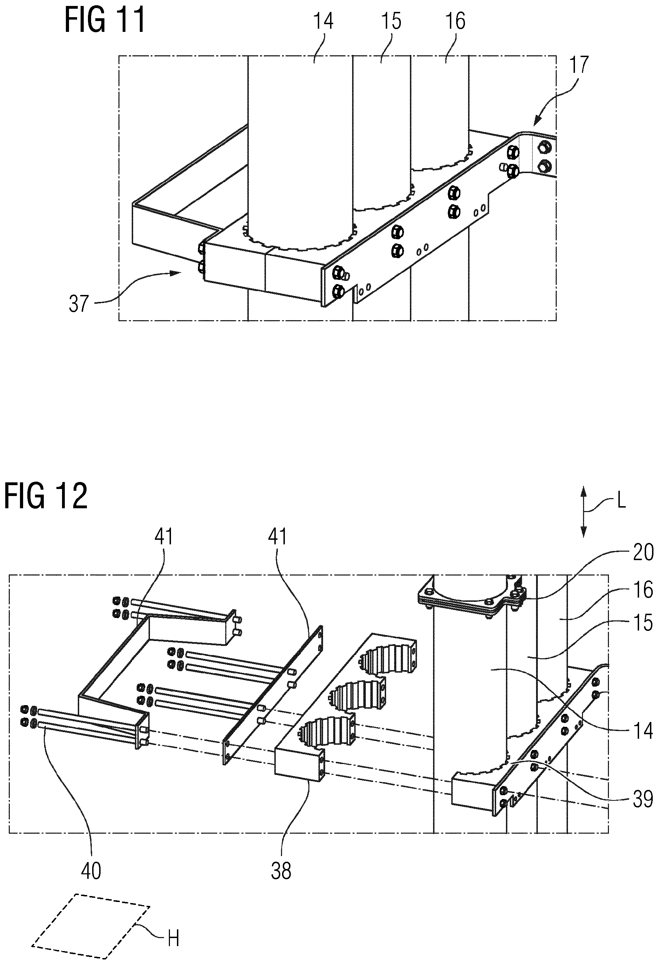

Fig. 11 illustrates an attachment mechanism 37 used to attach the pipes 14, 15, 16 to the bracket arrangement 17 of Fig. 2. Fig. 12 shows an exploded view of the attachment mechanism 37. The attachment mechanism 37 comprises two half-shells 38, 39 made of, preferably, POM which clamps, by the action of studs 40, therebetween in a frictionally locking manner the pipes 14, 15, 16. The frictional force applied is such that it compensates the force of gravity acting on the pipes 14, 15, 16. However, the pipes 14, 15, 16 may move in the lengthwise direction L when the tower 6 bends or when the pipes 14, 15, 16 extend or contract due to thermal effects. In this case, the frictionally locking force is overcome. Further, the pipes 14, 15, 16 are held in place by the half shells 38, 39 by a positive lock in the horizontal plane H (see also Fig. 2) of the tower 6. As the half-shells 38, 39 are made of POM, they are well suited to take up vibrations occurring in the pipes 14, 15, 16. Using, for example, a cable bracket 41, the half shells 38, 39 and therefore the pipes 14, 15, 16 are attached to the ladder 13.

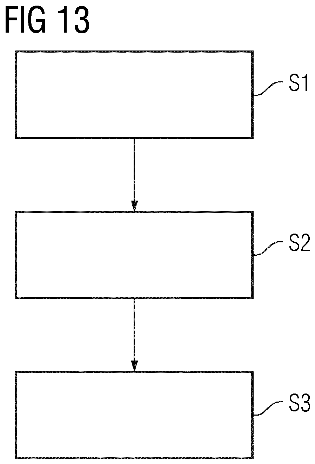

Fig. 13 illustrates, in a flowchart, a method according to an embodiment.

In step S1, the pipes 14, 15, 16 are placed inside the tower inner volume 46 (see Fig. 2) of the tower section 8 so as to extend in the axial direction L of the tower section 8. In this, the pipes 14, 15, 16 are attached to the ladder 13 as illustrated in Figs. 2. This process is repeated for a number of tower sections 7, 9.

Then, the preassembled tower sections 7, 8, 9 are transported to the erection site, for example out at sea. The tower sections 7, 8, 9 are erected in step S2 in Fig. 13 by stacking these on top of each other and connecting these at respective flanges as explained in connection with Figs. 1 and 2, thus forming the tower 6.

In step S3, a respective high-voltage cable 114 is passed through one column of pipes 14', 14. To this end, for example, a winch (not shown) at the nacelle 5 is used. The winch has a steel cable which is let down through one column of pipes 14', 14 and connected to one end of the high-voltage cable 14. Then, the high-voltage cable 114 is pulled up through the column of pipes 14', 14 and passes through the spacers 23, radially deforming the fingers 27 at each spacer 23. Once the high-voltage cable 114 has been pulled up, using the winch, to the top of the tower 6, the clamping units 35 of each clamping unit 34 are fastened so as to hold the high-voltage cables 114 in place in the vertical direction. This process is repeated for the high-voltage cables 115, 116 and corresponding columns of pipes 15, 15' and 16, 16'

Thus, the weight of each of the high-voltage cables 114, 115, 116 is divided between multiple clamping units 35 in the vertical direction. Portions of each high-voltage cable 114, 115, 116 are suspended from an above cable clamp 34. Other than the clamping units 35, there is no vertical support for the high-voltage cables 114, 115, 116 between two consecutive platforms 12.

Although the present invention has been described in accordance with preferred embodiments, it is obvious for the person skilled in the art that modifications are possible in all embodiments.

## Claims

1. A tower (6) or tower section (7, 8, 9) of a wind turbine (1), comprising:
a tower wall (47) enclosing a tower inner volume (46),
a first pipe (14) arranged inside the tower inner volume (46) and extending in the vertical direction (L) of the tower (6) or tower section (7, 8, 9), and
a first high-voltage cable (114) extending through the first pipe (14).

2. The tower or tower section according to claim 1, further comprising:
a second pipe (15) arranged in parallel with the first pipe (14) inside the tower inner volume (46), and
a second high-voltage cable (115) extending through the second pipe (15).

3. The tower or tower section according to claim 1 or 2, wherein an air gap (30) is present between an outer surface (31) of the first and/or second high-voltage cable (114) and an inner surface (32) of the first and/or second pipe (14, 15) .

4. The tower or tower section according to claim 3, further comprising spacers (23) arranged along the length of the first and/or second high-voltage cable (14, 15) to maintain the air gap (30).

5. The tower or tower section according to claim 4, wherein the spacers (23) center the first and/or second high-voltage cable (114, 115) on a longitudinal central axis (C) of the first and/or second pipe (14, 15).

6. The tower or tower section according to claim 4 or 5, wherein the spacers (23) are made of a flexible material and/or comprise multiple fingers (27) extending inwardly from an outer circumference (28) with gaps (50) formed between adjacent fingers (27).

7. The tower or tower section according to one of claims 1 to 6, wherein the first and/or second pipe (14, 15) is comprised of multiple pipe sections (18, 19) flanged together at respective flanges (20, 22).

8. The tower or tower section according to claim 7, wherein the spacers (23) are arranged between the respective flanges (20, 22).

9. The tower or tower section according to one of claims 1 to 8, further comprising a zig-zag shaped metal plate (42) connecting the first and/or second pipe (14, 15) to ground potential.

10. The tower or tower section according to one of claims 1 to 9, further comprising a ladder (13), wherein the first and/or second pipe (14, 15) is attached to the ladder (13) in a frictionally locking manner, allowing longitudinal movement of the first and/or second pipe (14, 15) relative to the ladder (13).

11. The tower or tower section according to claim 10, wherein the first and/or second pipe (14, 15) is, for the attachment of the first and the second pipe (14, 15) to the ladder (13) in a frictionally locking manner, clamped between two half-shells (38, 39) fastened to each other.

12. The tower or tower section according to one of claims 1 to 11, further comprising a platform (12) and a cable clamp (34), wherein the first and/or second pipe (14, 15) is arranged below the platform (12) and the cable clamp (34) suspends the first and/or second high-voltage cable (114, 115) from the platform (12).

13. The tower according to claim 12, comprising a further pipe (14', 15') arranged above and spaced apart from the platform (12), wherein the cable clamp (34) is attached to a portion of the first and/or second high-voltage cable (114, 115) arranged between the first and/or second pipe (14, 15) and the further pipe (14', 15').

14. A wind turbine (1) comprising the tower (6) or tower section (7, 8, 9) according to one of claims 1 to 13.

15. A method of manufacturing a tower (6) or tower section (7, 8, 9) for a wind turbine (1), the tower (6) or tower section (7, 8, 9) having a tower wall (47) enclosing a tower inner volume (46), the method comprising:
arranging (S1) a first pipe (14) inside the tower inner volume (46) so as to extend in the axial direction (L) of the tower (6) or tower section (7, 8, 9), and
erecting (S2) the tower (6) or tower section (7, 8, 9) at an erection site of the wind turbine (1), and
passing (S3) a first high-voltage cable (114) through the first pipe (14).
